(19) **Europäisches Patentamt**

**European Patent Office**

**Office européen des brevets**

(11) **EP 1 063 610 B1**

(12) **EUROPEAN PATENT SPECIFICATION**

(45) Date of publication and mention
of the grant of the patent:
**14.12.2005 Bulletin 2005/50**

(51) Int Cl.⁷: **G06K 17/00**, G06K 1/12,
G06K 7/00

(21) Application number: **99304836.2**

(22) Date of filing: **21.06.1999**

(54) **Electronic identification system and method with source authenticity**

Elektronisches Identifizierungssystem und -verfahren mit Ursprungsechtheit

Système et méthode d'identification électronique à authenticité de la source

(84) Designated Contracting States:
**AT BE CH DE ES FR GB IT LI NL**

(43) Date of publication of application:
**27.12.2000 Bulletin 2000/52**

(73) Proprietor: **Supersensor (Proprietary) Limited
Goodwood 7460 (ZA)**

(72) Inventors:
• **Turner, Christopher Gordon Gervase
Halfway House, Gauteng (ZA)**
• **Kruger, Dawid
2068 Gauteng (ZA)**

(74) Representative: **Robson, Aidan John
Reddie & Grose
16 Theobalds Road
London WC1X 8PL (GB)**

(56) References cited:
**DE-A- 19 653 113**          **US-A- 4 663 622**
**US-A- 5 041 826**          **US-A- 5 640 002**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### INTRODUCTION AND BACKGROUND

THIS invention relates to electronic identification systems and more particularly to such systems including radio frequency (RF) transponders and associated readers, interrogators and verifiers therefor.

A system of the aforementioned kind is typically used to mark and identify products or goods, and would further include a plurality of encoder units for writing data into respective memory arrangements of the transponders. In use, a transponder is attached to a product item and the data written into the transponder may relate to the kind of product, the date of manufacture and/or any other data relating to the product. Normally the data is written into the memory arrangement at the source of the product, but in some applications additional data may be written into the memory arrangement at various points along a distribution chain. Of course the data written into the memory arrangement can at any stage be read with a verifier, interrogator or reader.

In some applications, security arrangements are required which would prevent unauthorized parties from attaching non-genuine transponders (purporting to store data encoded by an authorised encoder) to grey or infringing goods, thereby facilitating passing the grey goods off as genuine goods.

A system according to the preamble of claim 1 is known from US-A-5 640 002.

### OBJECT OF THE INVENTION

A preferred embodiment of the present invention provides a system and method with which transponders originating from an authorized source can be distinguished from non-genuine transponders.

### SUMMARY OF THE INVENTION

The object of the invention is achieved by an electronic identification system according to claim 1 and the method of claim 19.

The encoder may include a memory arrangement wherein a plurality of identification codes for the encoder are stored and the means for providing an identification code may include a controller for randomly selecting one of the authorized codes.

The system may further include a central computer for generating the plurality of identification codes and for downloading the identification codes into the at least one encoder and into the at least one verifier, to constitute corresponding authorized codes.

The controller of the encoder may further include encryption means utilizing a first encryption algorithm and the identification code in a first encryption process, to provide encrypted data relating to the identification code, to form part of the data to be written into the transponder.

In a preferred embodiment the controller of the encoder is programmed randomly to select the first encryption algorithm from a first set of encryption algorithms pre-stored in the memory arrangement of the encoder.

Each encryption algorithm may be associated with a unique algorithm address in the memory arrangement of the encoder.

The algorithms may be downloaded from the central computer into the encoder upon start-up of the encoder. The algorithms are preferably also downloaded into memory locations of the verifier having corresponding addresses.

Each algorithm may include a function of at least one physical characteristic of the transponder, for example a clock frequency of circuitry of the transponder. The algorithm may be of a general form wherein the selected identification code is equal to at least one function of a suitable physical characteristic of the transponder plus a first remainder.

The data relating to the identification code and which forms part of the data to be written into the transponder may include the aforementioned first remainder. Preferably it consists of the first remainder only.

Data relating to the algorithm address of the selected algorithm may also be included in the data to be written into the memory arrangement of the transponder. The controller of the encoder may utilize a second algorithm and the data relating to the address in a second encryption process, to yield encrypted data relating to the algorithm address. The second algorithm may be of a general form wherein the algorithm address is equal to at least one function of an independent variable plus a second remainder.

The encrypted data relating to the algorithm address and which forms part of the data to be written into the transponder may include the aforementioned second remainder. Preferably it consists of the second remainder only.

The verifier may include computing means adapted to use the second algorithm to decrypt the encrypted data relating to the address for the first algorithm.

The computing means may further be programmed to retrieve the first algorithm, to input data relating to the physical characteristics of the transponder and to use said data and the first algorithm to decrypt the data relating to the identification code, to yield an output code.

The computing means of the verifier may further include a comparator for comparing the output code to the authorized codes which are stored in the memory arrangement of the verifier.

The indicating means of the verifier may include a display.

The verifier may form part of a reader for the transponders. Alternatively, it may be a separate unit.

The encoder may have a plurality of identification codes associated therewith and the method may include the step of randomly selecting one of these codes for inclusion in the data to be written into the transponder.

Further according to the method of the invention a first encryption algorithm and the selected identification code may be used in a first encryption process to yield encrypted data relating to the identification code. Preferably the first algorithm is selectable from a first set of encryption algorithms. The algorithms may include a function of at least one physical characteristic of the transponder into which the data is to be written.

Each of the first set of encryption algorithms may be accessible by the encoder from a memory arrangement thereof utilizing a respective algorithm address. The method may include the further step of including data relating to the algorithm address of the selected algorithm in the data to be written into the transponder. A second algorithm and data relating to the address of the selected algorithm may be utilized in a second encryption process to yield encrypted data relating to the algorithm address for inclusion in the data to be written into the transponder.

The method may further include the step of utilizing at the verifier the data relating to the algorithm address to retrieve from a memory arrangement of the verifier the algorithm utilized during the first encryption process.

The method may further include the steps of: providing computing means in the verifier with data relating to the physical characteristics of the transponder; and utilizing said data and the retrieved algorithm to decrypt the encrypted data relating to the identification code.

The method may still further include the step of comparing the decrypted data relating to the identification code to the data relating to authorized identification codes stored in a memory arrangement of the verifier.

## BRIEF DESCRIPTION OF THE ACCOMPANYING DIAGRAMS

The invention will now further be described, by way of example only, with reference to the accompanying diagrams wherein:

figure 1    is a basic block diagram of a system embodying the invention;

figure 2    is a block diagram showing an encoder, a transponder and a verifier forming part of the system in more detail; and

figure 3    is a basic flow diagram of a decoding process forming part of the method embodying the invention.

## DESCRIPTION OF A PREFERRED EMBODIMENT OF THE INVENTION

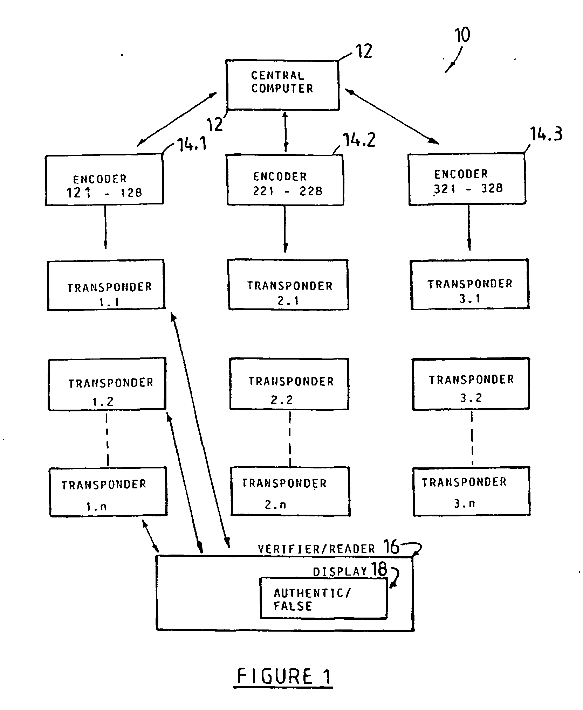

An electronic identification system embodying the invention is generally designated by the reference numeral 10 in figure 1.

The system 10 includes a central computer system 12 which manages and controls the rest of the system. The system 10 further includes a plurality of transponder encoders 14.1 to 14.3 adapted to be brought into communication with the central computer to be programmed thereby. In use, each encoder is preferably located at a source (not shown) or manufacturing plant of products to which transponders are to be secured, to program such transponders by writing data into the transponders. Each encoder has at least one, preferably eight plain-text identification (PTID) numbers or codes characteristic thereof. For example, the PTID'S associated with encoder 14.1 are numbers 121 to 128. These numbers are generated and issued by the central computer and stored in memory arrangements of each of the central computer 12, the relevant encoder and verifiers, which will be referred to hereinafter. Also stored in the central computer for downloading into the encoders and the verifiers respectively, are algorithms for encrypting data to be written into the transponders by the encoders and for decrypting the data by verifiers or readers, as will hereinafter be described. The PTID's and algorithms may from time to time be changed by the central computer 12 by downloading new numbers and algorithms, to maintain and improve the integrity and security of the system.

The system further includes a plurality of radio frequency (RF) transponders. Transponders 1.1 to 1.n are associated with encoder 14.1, transponders 2.1 to 2.n with encoder 14.2 and transponders 3.1 to 3.n with encoder 14.3.

The system still further includes a plurality of verifiers or readers (only one of which is shown at 16 in figure 1). The verifier includes display means 18 for displaying the outcome of an authenticity verification procedure performed in use by the verifier 16 on any of the transponders, in respect of the authenticity of an encoder used to program that transponder.

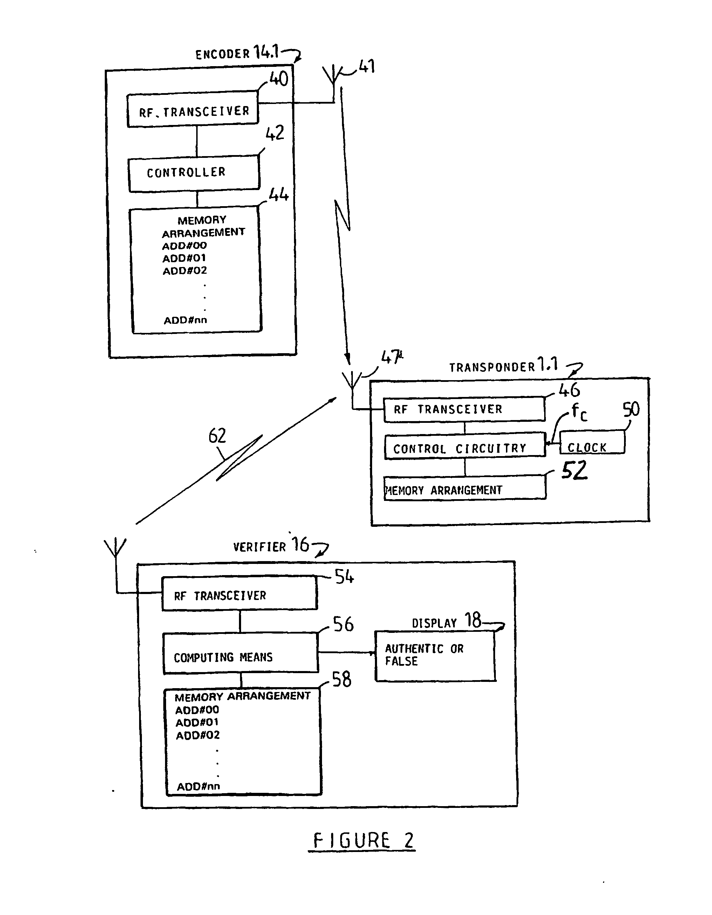

The encoders 14.1 to 14.3 are similar and therefore only encoder 14.1 will be described in more detail herebelow with reference to figure 2. Encoder 14.1 includes an RF transceiver 40, a controller 42 and a memory arrangement 44. Memory arrangement 44 includes a plurality of storage locations each addressable by the controller by a unique address ADD#00 to ADD#nn. The aforementioned PTID codes of the encoder 14.1, once downloaded by the central computer 12, are stored in respective ones of these locations. The aforementioned encryption algorithms or data relating thereto are also stored in respective ones of these locations and are directly or indirectly retrievable by the controller 42 by the respective addresses.

The transponders are also similar and therefore only transponder 1.1 will be described in more detail. Transponder 1.1 includes an RF transceiver 46, control circuitry 48, a clock 50 having a clock frequency $f_c$ and a memory arrangement 52.

Verifier 16 may form part of a reader (not shown) for the transponders, or may be a separate unit. The verifier 16 includes an RF transceiver 54, computing means 56, display 18 and a memory arrangement 58. The memory arrangement 58 includes a plurality of storage locations each addressable by the computing means 56 by a unique address ADD#00 to ADD#nn. The aforementioned PTID codes of the encoders are received from the central computer and stored in respective ones of these locations. The aforementioned encryption/decryption algorithms are similarly received from the central computer and stored in respective locations, or data relating to the algorithms may be stored in these locations. The algorithms are directly or indirectly retrievable by the computing means 56 by their respective addresses.

In use and as is well known in the art, a selected transponder 1.1 is brought into range of a programmed encoder 14.1. Data including data relating to the product to which the transponder is to be applied is transmitted via an RF link including transceiver 40, antenna 41, antenna 47 and transceiver 46 to the transponder. The transponder receives that data and stores the data in memory arrangement 52 forming part of the transponder. Along the distribution chain of the product, further data may similarly be written into the memory arrangement 52.

As is also well known in the art, the data may at any stage be read by a reader or verifier 16 in known manner. The verifier 16 transmits an RF energizing signal 62 to the transponder 1.1 and a virtual battery forming part of the transponder circuitry 54 is charged. The transponder responds by backscatter modulating on the energizing signal serving as carrier, a data stream including the data stored in the memory arrangement 52 and timed by the frequency $f_c$ of the clock 50. The verifier 16 in turn receives this data and may be adapted in known manner to switch the transponder just read to a sleep or the like mode, which causes the transponder to stop modulating the energizing signal.

It will be appreciated that with such a conventional system an unauthorized distributor of pirate, grey or otherwise infringing goods may simply attach a non-genuine transponder (carrying data similar to the data carried by transponders attached to genuine goods) to the grey goods. Unless sophisticated security mechanisms and methods are employed, such grey goods will not easily be identified or traced.

According to the invention, encrypted data relating to a selected one of the PTID numbers of the source encoder 14.1 is written into and stored as part of the data stored in the memory arrangement 52 of the transponder. To achieve this, the encoder controller is adapted randomly to select any one of the eight PTID numbers. This PTID number and a selected one of the encryption algorithms are utilized by encryption means forming part of the controller in a first encryption process, to yield encrypted data relating to the PTID number. At least some of the variables to be used with the encryption algorithm are functions of measurable physical characteristics of the transponder 1.1, such as the frequency $f_c$ of the transponder clock 50. The clock frequency $f_c$ is determined from a response signal from the transponder during the programming process.

The verifier 16 in turn is adapted (as will hereinafter be described) to retrieve the relevant decryption algorithm from its memory arrangement 58, to determine the relevant physical properties of the transponder concerned and to decipher the encrypted data into a plain-text number. If the deciphered plain-text number is equal to an authorized PTID number stored in the memory arrangement 58 of the verifier 16, an "AUTHENTIC" message is displayed on display 18. If the result of the deciphering process does not correspond to an authorized PTID, a "FALSE" message is displayed.

The encryption algorithm may be of the general form:

$$PTID = a.f(x) + b.f(y) + c.f(z) + rem \qquad A$$

wherein

PTID is the selected PTID number of the encoder;

a, b and c are scaling constants;

x, y, z are independent variables, preferably relating to physical characteristics of the transponder being programmed; and

rem is a remainder.

The encrypted data relating to the PTID of the encoder 14.1 and which is subsequently stored in the transponder 1.1, is preferably the remainder (rem) part only, of the above encryption process. The rem-data may be four bits in length.

As stated hereinbefore, a randomly selected first algorithm of a first set of encryption algorithms stored in the encoder 14.1 and correspondingly stored in the verifier 16 may be used to encrypt the PTID number of the encoder which is, as stated hereinbefore, randomly selected by the encoder from the available PTID numbers therefor. Data relating to the address where the selected first algorithm is stored and a second algorithm are used in a second encryption process, to yield encrypted data relating to the address of the selected first algorithm. The second algorithm is of the following general form:

$$AAD = d.f(m) + e.f(n) + g.f(o) + REM \qquad B$$

wherein

AAD       is the address of the selected first algorithm;
d, e and g    are scaling constants;
m,n and o    are independent variables; and
REM       is a remainder.

The encrypted data relating to the address of the first encryption algorithm and which is to be stored in the transponder 1.1, is preferably the remainder (REM) part only of the aforementioned second encryption process. The REM-data may be four bits in length.

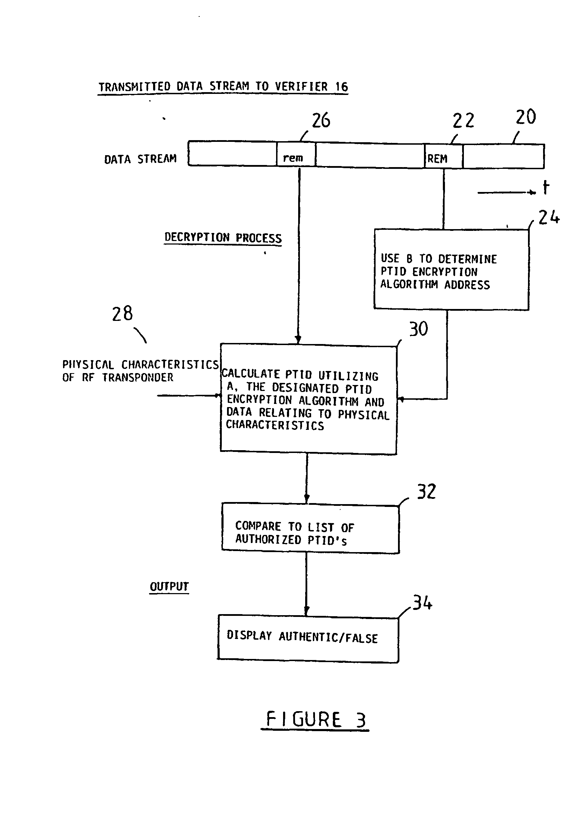

The data stored in the memory arrangement 52 of transponder 1.1 and which is backscatter modulated in the form of a data stream on the energizing signal 62 during a reading or verification process of the transponder, is diagrammatically illustrated in figure 3.

The data stream is designated 20 in figure 3. The REM-data 22 is utilized together with equation B as shown at 24, to calculate the address of the first encryption algorithm used by the encoder 14.1 to provide encrypted data relating to the randomly selected PTI number of the encoder. This address is utilized by the computing means 56 to retrieve the first algorithm from the memory arrangement 58 forming part of the verifier.

The aforementioned first algorithm, the rem-data 26 in the data stream 20 and input data 28 relating to physical characteristics (in this sample the frequency $f_c$ of the clock 50) of the transponder are utilized by the verifier 16 to calculate a plain-text output number at 30.

The plain-text output number is fed at 32 to a comparator of the computing means 56, to compare the number to a list of authorized PTID numbers stored in the memory arrangement 58 of the verifier. If the output number corresponds to one of the authorized PTID numbers, the verifier displays on display 18 the message "AUTHENTIC". This would indicate that the transponder 1.1 has been programmed with an authorized encoder 14.1 at the source of the product. If the output number does not so correspond, it would mean that the transponder 1.1 includes fake data and has not been programmed at an authorized source of the particular product. A "FALSE" message would then be displayed on display 18.

**Claims**

1. An electronic identification system (10) comprising:

   - at least one transponder encoder (14.1; 14.2; 14.3) for writing data to a transponder;
   - said encoder comprising means for providing an identification code characteristic of an entity externally of the transponder;
   - a plurality of transponders (1.1-1.n ; 2.1-2.n ; 3.1-3.n) each adapted to receive data from the at least one encoder and to store the data received in a respective memory arrangement of the transponder;
   - at least one verifier (16) for interrogating a selected transponder and to read data stored in the memory arrangement (52) of the selected transponder via a radio frequency link **characterized in that** said encoder further comprises an encryption device (42) for utilizing an algorithm and input data characteristic of the encoder to generate encrypted data to form at least part of the data written to the transponder; and **in that**
   - the at least one verifier comprises computing means (56) for extracting and deciphering the encrypted data from the data read thereby
   - a comparator for comparing the deciphered data to authorized data; and
   - an indicator (18) for providing an indication of an outcome of the comparison.

2. A system as claimed in claim 1 wherein the encoder comprises a memory arrangement wherein a plurality of identity codes characteristic of the encoder are stored; and wherein the encoder comprises a controller for randomly selecting one of said plurality of identification codes for use as the input data by the encryption device.

3. A system as claimed in claim 2 further comprising a central computer for generating the plurality of identification codes, and for downloading the identification codes into the memory arrangement of the encoder and into a memory arrangement of the at least one verifier.

4. A system as claimed in any one of claims 2 and 3 wherein the algorithm comprises a first encryption algorithm and wherein the encryption device utilizes the selected identification code and the first encryption algorithm to generate the encrypted data.

5. A system as claimed in claim 4 wherein the controller of the encoder is programmed randomly to select the first encryption algorithm from a first set of encryption algorithms pre-stored in the memory arrangement of the encoder.

6. A system as claimed in claim 5 wherein each algorithm in the first set of encryption algorithms is associated with a respective algorithm address in the memory arrangement of the encoder.

7. A system as claimed in any one of claims 4 to 6 wherein each encryption algorithm includes at least one term which is a function of at least one physical characteristic of the transponder into which the data is written.

**8.** A system as claimed in claim 7 wherein the physical characteristic is a frequency of a clock forming part of the transponder.

**9.** A system as claimed in claim 7 or claim 8 wherein each algorithm is of a general form wherein the selected identification code is equal to said at least one term plus a first remainder.

**10.** A system as claimed in claim 9 wherein the encrypted data comprises the aforementioned remainder.

**11.** A system as claimed in any one of claims 6 to 10 wherein the encrypted data further comprises encrypted address data relating to the respective algorithm address of the selected algorithm.

**12.** A system as claimed in claim 11 wherein the encryption device utilizes a second encryption algorithm and said data relating to the respective algorithm address to generate the encrypted address data.

**13.** A system as claimed in claim 12 wherein the second algorithm is of a general form wherein the respective algorithm address is equal to at least one term plus a second remainder.

**14.** A system as claimed in claim 13 wherein the encrypted address data comprises the aforementioned second remainder.

**15.** A system as claimed in any one of claims 12 to 14 wherein the computing means of the verifier is configured to use the second encryption algorithm to decrypt the encrypted address data to yield address data.

**16.** A system as claimed in claim 15 wherein the computing means of the verifier is configured to utilize the address data to retrieve the selected first algorithm, to obtain input data and to use said input data and the first encryption algorithm to decrypt the encrypted data to yield decrypted data.

**17.** A system as claimed in claim 16 wherein the wherein the comparator forms part of the verifier and is configured to compare the decrypted data to authorized identification codes which are stored in the memory arrangement of the verifier.

**18.** A system as claimed in claim 17 wherein the indicator comprises a display provided on the verifier.

**19.** A method of verifying the authenticity of a transponder, the method comprising the steps of:

- generating encrypted data utilizing an algorithm and input data characteristic of a transponder encoder;
- writing the encrypted data and data relating to an identification code of an entity externally of the transponder into the transponder utilizing the transponder encoder;
- reading the data written into the transponder with a verifier via a radio frequency link extending between the verifier and the transponder;
- extracting from the data read, the encrypted data;
- decipher the encrypted data
- comparing the deciphered data to authorized data; and
- providing an indication based on the comparison.

**20.** A method as claimed in claim 19 wherein the input data comprises an identification code characteristic of the encoder.

**21.** A method as claimed in claim 20 wherein the encoder has a plurality of identification codes characteristic thereof and wherein the method includes the step of randomly selecting one of said codes as said input data.

**22.** A method as claimed in any one of claims 20 to 21 wherein the step of generating encrypted data comprises the step of utilizing a first encryption algorithm and the identification code to generate encrypted data relating to the identification code.

**23.** A method as claimed in claim 22 wherein the first encryption algorithm is selectable from a first set of encryption algorithms.

**24.** A method as claimed in claim 22 or claim 23 wherein the first encryption algorithm comprises at least one term which is a function of at least one physical characteristic of the transponder into which the data is written.

**25.** A method as claimed in claim 23 or claim 24 wherein each algorithm of the first set of encryption algorithms is accessible by the encoder from a memory arrangement thereof utilizing a respective algorithm address.

**26.** A method as claimed in claim 25 wherein the step of generating encrypted data comprises the step of utilizing a second encryption algorithm and data relating to the respective algorithm address of the selected algorithm, to generate encrypted data relating to the respective algorithm address.

**27.** A method as claimed in claim 26 comprising the step of utilizing at the verifier decrypted data relating to the respective algorithm address to retrieve from a memory arrangement of the verifier the first encryption algorithm utilized during the first encryption process.

**28.** A method as claimed in claim 27 comprising the steps of providing to computing means in the verifier input data; and utilizing said input data and the retrieved first encryption algorithm to decrypt the encrypted data relating to the identification code.

**29.** A method as claimed in claim 28 wherein said step of comparing comprises the step of comparing the decrypted data relating to the identification code to data relating to authorized identification codes stored in a memory arrangement of the verifier.

**Patentansprüche**

**1.** Elektronisches Identifizierungssystem (10), umfassend:

- mindestens einen Transpondercodierer (14.1; 14.2; 14.3) zum Schreiben von Daten zu einem Transponder;
- wobei der Codierer Einrichtungen zur Bereitstellung eines Kennungscodes umfasst, der für eine außerhalb des Trarisponders befindliche Entität charakteristisch ist;
- eine Mehrzahl von Transpondern (1.1-1.n; 2.1-2.n; 3.1-3.n), wobei jeder angepasst ist, um Daten von dem mindestens einen Codierer zu empfangen und um die empfangen Daten in einer respektiven Speicheranordnung des Transponders zu speichern;
- mindestens einen Authentifizierer (16) zum Abfragen eines ausgewählten Transponders und zum Lesen von Daten, die in der Speicheranordnung (52) des ausgewählten Transponders gespeichert sind, über eine Radiofrequenzverbindung, **dadurch gekennzeichnet, dass** der Codierer weiter ein Verschlüsselungsgerät (42) umfasst, um einen Algorithmus und Eingangsdaten, die für den Codierer charakteristisch sind, zu verwenden, um verschlüsselte Daten zu erzeugen, um mindestens einen Teil der Daten zu bilden, die zu dem Transponder geschrieben werden; und dadurch, dass
- der mindestens eine Authentifizierer eine Recheneinrichtung (56) zum Gewinnen und Entschlüsseln der verschlüsselten Daten von den Daten, die durch ihn gelesen sind, umfasst
- einen Komparator zum Vergleichen der entschlüsselten Daten mit autorisierten Daten; und

- einen Anzeiger (18), um eine Anzeige eines Ergebnisses des Vergleichs zu liefern.

**2.** System nach Anspruch 1, bei dem der Codierer eine Speicheranordnung umfasst, in der eine Mehrzahl von Identitätscodes, die für den Codierer charakteristisch sind, gespeichert sind; und bei dem der Codierer einen Kontroller umfasst, um einen der Mehrzahl von Kennungscodes zur Verwendung als die Eingangsdaten durch das Verschlüsselungsgerät zufallsauszuwählen.

**3.** System nach Anspruch 2, weiter umfassend einen Zentralrechner zur Erzeugung der Mehrzahl von Kennungscodes und zum Herunterladen der Kennungscodes in die Speicheranordnung des Codierers und in eine Speicheranordnung des mindestens einen Authentifizierers.

**4.** System nach einem der Ansprüche 2 und 3, bei dem der Algorithmus einen ersten Verschlüsselungsalgorithmus umfasst und bei dem das Verschlüsselungsgerät den ausgewählten Kennungscode und den ersten Verschlüsselungsalgorithmus verwendet, um die verschlüsselten Daten zu erzeugen.

**5.** System nach Anspruch 4, bei dem der Kontroller des Codierers zufallsprogrammiert ist, um den ersten Verschlüsselungsalgorithmus aus einem ersten Satz von Verschlüsselungsalgorithmen auszuwählen, der in der Speicheranordnung des Codierers vorgespeichert ist.

**6.** System nach Anspruch 5, bei dem jeder Algorithmus im ersten Satz von Verschlüsselungsalgorithmen mit einer respektiven Algorithmusadresse in der Speicheranordnung des Codierers verbunden ist.

**7.** System nach einem der Ansprüche 4 bis 6, bei dem jeder Verschlüsselungsalgorithmus mindestens einen Term umfasst, der eine Funktion von mindestens einer physikalischen Charakteristik des Transponders ist, in den die Daten geschrieben werden.

**8.** System nach Anspruch 7, bei dem die physikalische Charakteristik eine Frequenz eines Taktgebers ist, der Teil des Transponders bildet.

**9.** System nach Anspruch 7 oder Anspruch 8, bei dem jeder Algorithmus von einer allgemeinen Form ist, wobei der ausgewählte Kennungscode gleich dem mindestens einen Term plus einem ersten Rest ist.

**10.** System nach Anspruch 9, bei dem die verschlüsselten Daten den vorerwähnten Rest umfassen.

**11.** System nach einem der Ansprüche 6 bis 10, bei dem die verschlüsselten Daten weiter verschlüsselte Adressdaten umfassen, die sich auf die respektive Algorithmusadresse des ausgewählten Algorithmus beziehen.

**12.** System nach Anspruch 11, bei dem das Verschlüsselungsgerät einen zweiten Verschlüsselungsalgorithmus verwendet und sich die Daten auf die respektive Algorithmusadresse beziehen, um die verschlüsselten Adressdaten zu erzeugen.

**13.** System nach Anspruch 12, bei dem der zweite Algorithmus von einer allgemeinen Form ist, wobei die respektive Algorithmusadresse gleich mindestens einem Term plus einem zweiten Rest ist.

**14.** System nach Anspruch 13, bei dem die verschlüsselten Adressdaten den zuvorerwähnten zweiten Rest umfassen.

**15.** System nach einem der Ansprüche 12 bis 14, bei dem die Recheneinrichtung des Authentifizierers konfiguriert ist, um den zweiten Verschlüsselungsalgorithmus zu verwenden, um die verschlüsselten Adressdaten zu entschlüsseln, um Adressdaten zu liefern.

**16.** System nach Anspruch 15, bei dem die Recheneinrichtung des Authentifizierers konfiguriert ist, um die Adressdaten zu verwenden, um den ausgewählten ersten Algorithmus wiederzugewinnen, um Eingangsdaten zu erhalten und die Eingangsdaten und den ersten Verschlüsselungsalgorithmus zu verwenden, um die verschlüsselten Daten zu entschlüsseln, um entschlüsselte Daten zu liefern.

**17.** System nach Anspruch 16, bei dem der Komparator Teil des Authentifizierers bildet und konfiguriert ist, um die entschlüsselten Daten mit autorisierten Kennungscodes zu vergleichen, die in der Speicheranordnung des Authentifizierers gespeichert sind.

**18.** System nach Anspruch 17, bei dem der Anzeiger eine Anzeige umfasst, die auf dem Authentifizierer zur Verfügung gestellt ist.

**19.** Verfahren zur Authentifizierung der Authentizität eines Transponders, wobei das Verfahren die Schritte umfasst:

- Erzeugen von verschlüsselten Daten unter Verwendung eines Algorithmus und von Eingangsdaten, die für einen Transpondercodierer charakteristisch sind;
- Schreiben der verschlüsselten Daten und von Daten, die sich auf einen Kennungscode einer außerhalb des Transponders befindlichen Entität beziehen, in den Transponder unter Verwendung des Transpondercodierers;
- Lesen der in den Transponder geschriebenen Daten mit einem Authentifizierer über eine Radiofrequenzverbindung, die sich zwischen dem Authentifizierer und dem Transponder erstreckt;
- Gewinnen von verschlüsselten Daten aus den gelesenen Daten;
- Entschlüsseln der verschlüsselten Daten;
- Vergleichen der entschlüsselten Daten mit autorisierten Daten; und
- Bereitstellen einer Anzeige auf Grundlage des Vergleichs.

**20.** Verfahren nach Anspruch 19, bei dem die Eingangsdaten einen Kennungscode umfassen, der für den Codierer charakteristisch ist.

**21.** Verfahren nach Anspruch 20, bei dem der Codierer eine Mehrzahl von Kennungscodes aufweist, die für ihn charakteristisch sind, und bei dem das Verfahren den Schritt umfasst: Zufallsauswählen eines der Codes als die Eingangsdaten.

**22.** Verfahren nach einem der Ansprüche 20 bis 21, bei dem der Schritt eines Erzeugens von verschlüsselten Daten den Schritt umfasst: Verwenden eines ersten Verschlüsselungsalgorithmus und des Kennungscodes, um verschlüsselte Daten zu erzeugen, die sich auf den Kennungscode beziehen.

**23.** Verfahren nach Anspruch 22, bei dem der erste Verschlüsselungsalgorithmus aus einem ersten Satz von Verschlüsselungsalgorithmen auswählbar ist.

**24.** Verfahren nach Anspruch 22 oder Anspruch 23, bei dem der erste Verschlüsselungsalgorithmus mindestens einen Term umfasst, der eine Funktion von mindestens einer physikalischen Charakteristik des Transponders ist, in den die Daten geschrieben werden.

**25.** Verfahren nach Anspruch 23 oder 24, bei dem sich auf jeden Algorithmus des ersten Satzes von Verschlüsselungsalgorithmen durch den Codierer von seiner Speicheranordnung zugreifen lässt, wobei eine respektive Algorithmusadresse verwendet wird.

**26.** Verfahren nach Anspruch 25, bei dem der Schritt eines Erzeugens von verschlüsselten Daten den Schritt umfasst: Verwenden eines zweiten Verschlüsselungsalgorithmus und von Daten, die sich auf die respektive Algorithmusadresse des ausgewählten Algorithmus beziehen, um verschlüsselte Daten zu erzeugen, die sich auf die respektive Algorithmusadresse beziehen.

**27.** Verfahren nach Anspruch 26, umfassend den Schritt: Verwenden von entschlüsselten Daten beim Authentifizierer, die sich auf die respektive Algorithmusadresse beziehen, um von einer Speicheranordnung des Authentifizierers den ersten Verschlüsselungsalgorithmus wiederzugewinnen, der während des ersten Verschlüsselungsprozesses verwendet wurde.

**28.** Verfahren nach Anspruch 27, umfassend die Schritte: Abgeben von in den Authentifizierer eingegebenen Daten an die Recheneinrichtung; und Verwenden der eingegebenen Daten und des wiedergewonnenen ersten Verschlüsselungsalgorithmus, um die verschlüsselten Daten, die sich auf den Kennungscode beziehen, zu entschlüsseln.

**29.** Verfahren nach Anspruch 28, bei dem der Schritt eines Vergleichens den Schritt umfasst: Vergleichen der entschlüsselten Daten, die sich auf den Kennungscode beziehen, mit Daten, die sich auf autorisierte Kennungscodes beziehen, die in einer Speicheranordnung des Authentifizierers gespeichert sind.

**Revendications**

**1.** Système d'identification électronique (10) comprenant :

- au moins un codeur de transpondeur (14.1 ; 14.2 ; 14.3) pour écrire des données dans un transpondeur ;
- ledit codeur comprenant des moyens pour fournir un code d'identification caractéristique d'une entité extérieure au transpondeur ;
- une pluralité de transpondeurs (1.1 - 1.n ; 2.1 - 2.n ; 3.1 - 3.n), chacun d'eux étant conçu pour recevoir des données en provenance de l'au moins un codeur et pour stocker les données reçues dans un agencement de mémoire respectif du transpondeur ;
- au moins un vérificateur (16) pour interroger un transpondeur sélectionné et pour lire les données stockées dans l'agencement de mémoire (52) du transpondeur sélectionné par l'intermédiaire d'une liaison radioélectrique ;

**caractérisé en ce que**

- ledit codeur comprend de plus un dispositif de chiffrement (42) pour utiliser un algorithme et des données d'entrée caractéristiques du codeur pour produire des données chiffrées pour former au moins une partie des données écrites dans le transpondeur et **en ce que** :

- l'au moins un vérificateur comprend des moyens de calcul (56) pour extraire et déchiffrer les données chiffrées à partir des données lues de ce fait ;
- un comparateur pour comparer les données déchiffrées à des données autorisées ; et
- un indicateur (18) pour fournir une indication du résultat de la comparaison:

**2.** Système selon la revendication 1, dans lequel le codeur comprend un agencement de mémoire dans lequel une pluralité de codes d'identité caractéristiques du codeur sont stockés ; et dans lequel le codeur comprend un contrôleur pour sélectionner aléatoirement l'un de ladite pluralité de codes d'identification pour que le dispositif de chiffrement l'utilise comme données d'entrée.

**3.** Système selon la revendication 2, comprenant de plus un ordinateur central pour produire la pluralité de codes d'identification, et pour télécharger les codes d'identification dans l'agencement de mémoire du codeur et dans un agencement de mémoire de l'au moins un vérificateur.

**4.** Système selon l'une quelconque des revendications 2 et 3, dans lequel l'algorithme comprend un premier algorithme de chiffrement et dans lequel le dispositif de chiffrement utilise le code d'identification sélectionné et le premier algorithme de chiffrement pour produire les données chiffrées.

**5.** Système selon la revendication 4, dans lequel le contrôleur du codeur est programmé aléatoirement pour sélectionner le premier algorithme de chiffrement à partir d'un premier ensemble d'algorithmes de chiffrement préenregistrés dans l'agencement de mémoire du codeur.

**6.** Système selon la revendication 5, dans lequel chaque algorithme dans le premier ensemble d'algorithmes de chiffrement est associé à une adresse d'algorithme respective dans l'agencement de mémoire du codeur.

**7.** Système selon l'une quelconque des revendications 4 à 6, dans lequel chaque algorithme de chiffrement comprend au moins un terme qui est une fonction d'au moins une caractéristique physique du transpondeur dans lequel les données sont écrites.

**8.** Système selon la revendication 7, dans lequel la caractéristique physique est une fréquence d'une horloge faisant partie du transpondeur.

**9.** Système selon l'une quelconque des revendications 7 ou 8, dans lequel chaque algorithme a une forme générale dans laquelle le code d'identification sélectionné est égal audit au moins un terme plus un premier reste.

**10.** Système selon la revendication 9, dans lequel les données chiffrées comprennent le reste mentionné ci-dessus.

**11.** Système selon l'une quelconque des revendications 6 à 10, dans lequel les données chiffrées comprennent de plus des données d'adresse chiffrées concernant l'adresse d'algorithme respective de l'algorithme sélectionné.

**12.** Système selon la revendication 11, dans lequel le dispositif de chiffrement utilise un second algorithme de chiffrement et lesdites données concernant l'adresse d'algorithme respective pour produire les données d'adresse chiffrées.

**13.** Système selon la revendication 12, dans lequel le second algorithme a une forme générale dans laquelle l'adresse d'algorithme respective est égale à au moins un terme plus un second reste.

**14.** Système selon la revendication 13, dans lequel les données d'adresse chiffrées comprennent le second reste mentionné ci-dessus.

**15.** Système selon l'une quelconque des revendications 12 à 14, dans lequel les moyens de calcul du vérificateur sont configurés pour utiliser le second algorithme de chiffrement pour déchiffrer les données d'adresse chiffrées pour produire les données d'adresse.

**16.** Système selon la revendication 15, dans lequel les moyens de calcul du vérificateur sont configurés pour utiliser les données d'adresse pour extraire le premier algorithme sélectionné, pour obtenir les données d'entrée et pour utiliser lesdites données d'entrée et le premier algorithme de chiffrement pour déchiffrer les données chiffrées pour produire les données déchiffrées.

**17.** Système selon la revendication 16, dans lequel le comparateur fait partie du vérificateur et est configuré pour comparer les données déchiffrées aux codes d'identification autorisés qui sont stockés dans l'agencement de mémoire du vérificateur.

**18.** Système selon la revendication 17, dans lequel l'indicateur comprend un affichage fourni sur le vérificateur.

**19.** Procédé de vérification de l'authenticité d'un transpondeur, le procédé comprenant les étapes consistant à :

- produire des données chiffrées en utilisant un algorithme et des données d'entrée caractéristiques d'un codeur de transpondeur ;
- écrire les données chiffrées et les données concernant un code d'identification d'une entité extérieure au transpondeur dans le transpondeur en utilisant le codeur de transpondeur ;
- lire les données écrites dans le transpondeur avec un vérificateur par l'intermédiaire d'une liaison radioélectrique s'étendant entre le vérificateur et le transpondeur ;
- extraire les données chiffrées à partir des données lues ;
- déchiffrer les données chiffrées ;
- comparer les données déchiffrées aux données autorisées ; et
- fournir une indication sur la base de la comparaison.

**20.** Procédé selon la revendication 19, dans lequel les données d'entrée comprennent un code d'identification caractéristique du codeur.

**21.** Procédé selon la revendication 20, dans lequel le codeur possède une pluralité de codes d'identification caractéristiques de celui-ci et dans lequel le procédé comprend l'étape consistant à sélectionner aléatoirement l'un desdits codes en tant que dites données d'entrée.

**22.** Procédé selon l'une quelconque des revendications 20 à 21, dans lequel l'étape consistant à produire des données chiffrées comprend l'étape consistant à utiliser un premier algorithme de chiffrement et le code d'identification pour produire des données chiffrées concernant le code d'identification.

**23.** Procédé selon la revendication 22, dans lequel le premier algorithme de chiffrement peut être sélectionné à partir d'un premier ensemble d'algorithmes de chiffrement.

**24.** Procédé selon l'une quelconque des revendications 22 ou 23, dans lequel le premier algorithme de chiffrement comprend au moins un terme qui est une fonction d'au moins une caractéristique physique du transpondeur dans lequel les données sont écrites.

**25.** Procédé selon l'une quelconque des revendications 23 ou 24, dans lequel chaque algorithme du premier ensemble d'algorithmes de chiffrement est accessible par le codeur d'un agencement de mémoire de celui-ci en utilisant une adresse d'algorithme respective.

**26.** Procédé selon la revendication 25, dans lequel l'étape consistant à produire des données chiffrées comprend l'étape consistant à utiliser un second algorithme de chiffrement et les données concernant l'adresse d'algorithme respective de l'algorithme sélectionné, pour produire des données chiffrées concernant l'adresse d'algorithme respective.

27. Procédé selon la revendication 26, comprenant l'étape consistant à utiliser au niveau du vérificateur les données déchiffrées concernant l'adresse d'algorithme respective pour extraire à partir d'un agencement de mémoire du vérificateur le premier algorithme de chiffrement utilisé au cours du premier processus de chiffrement.

28. Procédé selon la revendication 27, comprenant les étapes consistant à fournir les données d'entrée aux moyens de calcul dans le vérificateur ; et consistant à utiliser lesdites données d'entrée et le premier algorithme de chiffrement extrait pour déchiffrer les données chiffrées concernant le code d'identification.

29. Procédé selon la revendication 28, dans lequel ladite étape consistant à comparer comprend l'étape consistant à comparer les données déchiffrées concernant le code d'identification aux données concernant des codes d'identification autorisés enregistrés dans un agencement de mémoire du vérificateur.

FIGURE 1

ENCODER 14.1

RF TRANSCEIVER 40

41

CONTROLLER 42

MEMORY
ARRANGEMENT 44
ADD#00
ADD#01
ADD#02
.
.
.
ADD#nn

47

TRANSPONDER 1.1

RF TRANSCEIVER 46

$f_c$ 50

CONTROL CIRCUITRY CLOCK

52

MEMORY ARRANGEMENT

62

VERIFIER 16

RF TRANSCEIVER 54

DISPLAY 18

COMPUTING MEANS 56

AUTHENTIC OR FALSE

MEMORY ARRANGEMENT 58
ADD#00
ADD#01
ADD#02
.
.
.
ADD#nn

FIGURE 2

TRANSMITTED DATA STREAM TO VERIFIER 16

DATA STREAM

| | rem | | REM | |

*26* *22* *20*

→ t

*24*

USE B TO DETERMINE
PTID ENCRYPTION
ALGORITHM ADDRESS

DECRYPTION PROCESS

*28*

PHYSICAL CHARACTERISTICS
OF RF TRANSPONDER

*30*

CALCULATE PTID UTILIZING
A, THE DESIGNATED PTID
ENCRYPTION ALGORITHM AND
DATA RELATING TO PHYSICAL
CHARACTERISTICS

*32*

COMPARE TO LIST OF
AUTHORIZED PTID's

OUTPUT

*34*

DISPLAY AUTHENTIC/FALSE

FIGURE 3

14